# FASCICULE DE BREVET EUROPEEN

(11) **EP 2 817 166 B1**
(45) Date de publication et mention de la délivrance du brevet: **30.03.2016**
(21) Numéro de dépôt: 13706596.7
(22) Date de dépôt: 30.01.2013
(51) Int. Cl.: B60K 17/10, B60K 17/16, F03C 1/06, F04B 1/20, F16H 47/04

(54) **MODULE HYDRAULIQUE COMPACT POUR VEHICULE HYBRIDE HYDRAULIQUE**
KONPAKTES HYDRAULIKMODUL FÜR HYBRIDES HYDRAULISCHES FAHRZEUG
COMPACT HYDRAULIC MODULE FOR HYDRAULIC HYBRID VEHICLE

(30) Priorité: 24.02.2012 FR 1251721
(43) Date de publication de la demande: 31.12.2014
(73) Titulaire: Technoboost, 75116 Paris (FR)
(72) Inventeur: GIANNONI, Marc, F-75009 Paris (FR); WASCHEUL, Michael, F-78260 Acheres (FR)
(74) Mandataire: Rosenberg, Muriel Sylvie
(86) Numéro de dépôt international: PCT/FR2013/050193
(87) Numéro de publication internationale: WO 2013/124560

(56) Documents cités:
- DE-A1- 3 307 047
- DE-A1- 19 639 732
- JP-A- 55 057 671
- ACHTEN P: "KEINE KOMPROMISSEN -HYDROSTATISCHER ALLRADANTRIEB FUER AUTOMOBILE UND ANDERE FAHRZEUGE", O + P OLHYDRAULIK UND PNEUMATIK, VEREINIGTE FACHVERLAGE, MAINZ, DE, vol. 52, no. 3, 1 mars 2008 (2008-03-01), pages 92-96, XP001511836, ISSN: 0341-2660

## Description

La présente invention concerne les véhicules hybrides hydrauliques et se rapporte plus particulièrement à un module hydraulique comportant un ou plusieurs moteurs hydrauliques, couplés au différentiel du véhicule pour fournir une puissance motrice aux roues du véhicule.

Un véhicule hybride hydraulique se différencie d'un véhicule hybride électrique par sa source de puissance hydraulique en lieu et place d'une source de puissance d'origine électrique.

Dans un véhicule hybride hydraulique, la boîte de vitesses classique est remplacée, ou complétée, par un circuit hydraulique fermé.

Une source d'énergie rotative (souvent un moteur thermique voire électrique) entraîne une ou plusieurs pompes hydrauliques volumétriques, de préférence à cylindrée variable, de haute précision.

La pompe hydraulique transforme l'énergie mécanique en énergie hydraulique. Cette énergie est stockée dans un ou des accumulateurs haute pression et est ensuite restituée dans le/les moteurs hydrauliques pour propulser le véhicule. Ainsi, les moteurs hydrauliques transforment l'énergie hydraulique en énergie mécanique.

On connaît plusieurs types d'architecture pour des transmissions hybrides hydrauliques :
- une architecture dite « série »,
- une architecture dite « parallèle » ou
- une architecture dite à « dérivation » (dérivation de puissance mettant en oeuvre un ou plusieurs trains épicycloïdaux).

Avec une transmission de type « parallèle », le système hydraulique vient en général se greffer sur la transmission classique du véhicule, ayant comme rôle d'optimiser le système initial.

Une transmission de type « série », remplace complètement l'architecture de la transmission classique : elle comporte une liaison hydraulique entre le moteur thermique et la roue.

La transmission de type « dérivation » est une architecture mixte permettant d'obtenir une transmission série ou parallèle.

On connait également différents types des pompes ou moteurs hydrauliques couplés à ces différentes architectures de transmission hydrauliques.

La pompe (ou le moteur, en fonction du sens de rotation et de son utilisation) hydraulique, utilisée pour de telles transmissions, est souvent une pompe volumétrique à pistons, notamment des pompes à pistons axiaux en ligne avec un barillet tournant.

L'autre famille de pompe volumétrique utilisée aussi, est celle des pompes à piston radiaux.

Dans une pompe volumétrique, le fluide est isolé dans une chambre à volume variable pour être transféré de la zone d'aspiration (basse pression) vers la zone de refoulement (haute pression).

Ce type de pompe est dit volumétrique car elle véhicule un volume de fluide à chaque tour de fonctionnement : ce volume par tour de fonctionnement est appelé cylindrée.

Généralement, pour les pressions hydrauliques élevées (supérieure à 300 bars) on utilise des pompes à pistons axiaux de type à patins ou à rotules pour les pompes à axes brisés ou des pompes à piston radiaux sur galet.

Dans le cadre d'une transmission hydraulique, l'entraînement d'un différentiel avec un moteur hydraulique nécessite l'encombrement d'un différentiel et d'un ou deux moteurs hydrauliques (voir notamment les documents US2005070390 ou WO2005075233).

Le document DE 196 39 732 décrit un module hydraulique compact similaire à celui de la revendication 1 mais qui ne comporte pas de glace de distribution de part et d'autre d'un plateau fixe commun.

On greffe ces composants hydrauliques sur le boîtier des différentiels avant pour les tractions avant, arrière pour les propulsions et avant et/ou arrière et/ou central pour les véhicules tout terrain (4x4). Ces solutions présentent des architectures simples sur le papier mais dont l'implantation dans le compartiment moteur et dans le soubassement arrière est difficile du fait de l'encombrement relativement important de ces architectures.

Un but de la présente invention est de proposer un module hydraulique compact avec une architecture simple, facile à implanter dans un véhicule tout en conservant au maximum l'architecture organique du véhicule que l'on veut hybrider hydrauliquement.

A cet effet, l'invention a pour objet un module hydraulique compact pour fournir une puissance motrice à un véhicule, comprenant un carter dans lequel est logé un moteur hydraulique comprenant une glace de distribution et un barillet disposés de part et d'autre d'un plateau fixe commun et des pistons libres sur rotules disposés entre le plateau et le barillet et coopérant avec eux ; ledit moteur hydraulique convertissant l'énergie provenant d'un fluide sous pression, en énergie mécanique sous la forme d'un couple entraînant un différentiel, contenu dans le même carter et dont les arbres de sorties sont couplés aux roues motrices du véhicule ; ledit différentiel comportant un boîtier contenant des pignons satellites coopérant avec des pignons planétaires solidaires des arbres de sortie du différentiel, couplés aux roues motrices du véhicule et configurés pour distribuer le couple vers les arbres de sortie, dans lequel le différentiel est monté en rotation à l'intérieur du moteur hydraulique, et l'axe de rotation du moteur hydraulique est confondu avec l'axe de rotation du différentiel.

L'intérêt principal de cette invention est le gain de place acquis grâce à l'intégration du différentiel à l'intérieur d'un moteur hydraulique avec le principe des pistons libres sur rotules.

Le volume sous le capot et/ou sous le plancher du véhicule, est équivalent au volume d'un ou de deux moteurs hydrauliques pour un véhicule hybride hydraulique.

Le boîtier du différentiel sert de corps de pompe du moteur hydraulique. Ce qui permet de gagner un volume sous le capot équivalent au volume du différentiel, tout en conservant le même différentiel classique.

Pour l'hybridation hydraulique série, cette intégration supprime le couple pignon/ couronne de différentiel.

Un module unique servira de différentiel et de pompe hydraulique. Ce qui permettra de gagner de la place sous le capot et aussi de simplifier l'architecture de l'hybride hydraulique.

On utilise les mêmes roulements de paliers de différentiel et d'arbre de support de moteur hydraulique.

La lubrification du différentiel est effectuée par l'huile du moteur hydraulique. (Différentiel de type étanche).

L'implantation des composants du mode hydraulique est totalement symétrique. Le sous-ensemble de droite est identique à celui de gauche.

En inversant le sens des plateaux, pour des moteurs à cylindrée variable, on peut avantageusement utiliser le module hydraulique pour faire de la récupération d'énergie au freinage ou un roulage en marche arrière.

Ces fonctions peuvent également être obtenues en inversant et en contrôlant hydrauliquement les sortie basse pression et haute pression.

Les moteurs hydrauliques deviennent alors des pompes qui rechargent l'accumulateur haute pression.

Le fait d'intégrer le moteur hydraulique et le différentiel dans un même carter d'un module hydraulique permet de conserver au maximum l'architecture organique du véhicule que l'on veut hybrider hydrauliquement.

Ainsi, il n'y aura pas de modification au niveau des portes moyeux des roues, modification souvent nécessaire pour l'intégration du moteur hydraulique et de son réducteur. Un réducteur est indispensable quand on veut réduire les dimensions du moteur et donc, pour la même puissance à passer, on doit augmenter son régime qui devient alors incompatible avec celui des roues du véhicule.

Ce type de montage est néfaste pour le confort de la suspension, car on augmente les masses non-suspendues (poids moteur et réducteur ajouté à celui de la roue).

L'invention sera mieux comprise et d'autres avantages ressortiront à la lecture de la description qui suit, donnée uniquement à titre d'exemple non limitatif et faite en référence aux dessins sur lesquels :

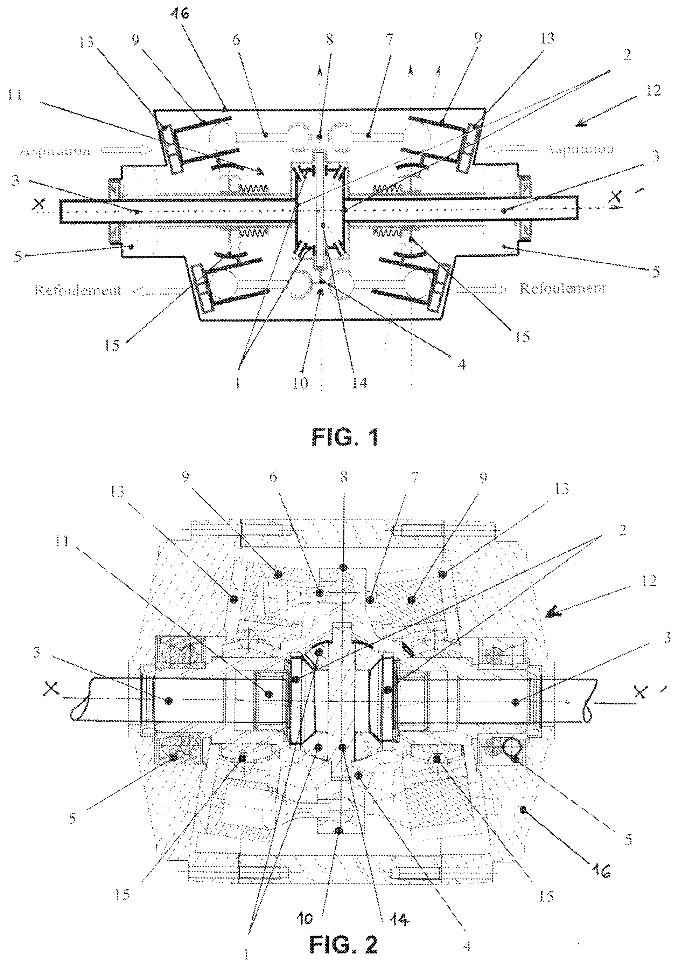

- la figure 1 illustre le schéma fonctionnel, en coupe longitudinale, du module hydraulique selon l'invention ; et
- la figure 2 illustre le dessin en coupe longitudinale du module hydraulique selon l'invention.

Sur les figures, les mêmes références numériques désignent les mêmes composants.

Le module hydraulique compact selon l'invention comprend un carter 16 dans lequel est logé un moteur hydraulique 11.

Le module hydraulique comprend, également logé dans le même carter, un différentiel dont les arbres de sorties 3 sont couplés aux roues motrices du véhicule.

Le différentiel comporte un boîtier 4 contenant des pignons satellites 1 coopérant avec des pignons planétaires 2, solidaires des arbres de sortie du différentiel, couplés aux roues motrices du véhicule (non représentées).

Les extrémités libres de l'axe 14 des satellites sont solidairement liées au boîtier du différentiel.

Les pignons satellites coopèrent avec les pignons planétaires pour distribuer le couple vers les arbres de sortie.

Le différentiel est monté en rotation à l'intérieur du moteur hydraulique, et l'axe de rotation XX' du moteur hydraulique est confondu avec l'axe de rotation du différentiel.

Le boîtier du différentiel comporte deux demi-boîtiers présentant chacun un flasque. Les deux flasques sont fixés solidairement entre eux et définissant le plateau commun à des premier et second sous-ensembles du moteur hydraulique, disposés de part et d'autre du plateau commun et centrés sur l'axe de rotation du différentiel.

Il est disposé au centre du carter du module hydraulique ; le plateau commun s'étendant suivant un plan perpendiculaire au plan par lequel passe l'axe de rotation du moteur hydraulique.

Le plan de jonction 10 des deux flasques définit un plan de symétrie vertical du différentiel, du moteur hydraulique et par conséquent du module hydraulique.

Les composants des premier et second sous-ensembles du moteur hydraulique sont identiques et disposés symétriquement par rapport au plan de jonction.

Chaque sous-ensemble comporte une série de pistons 6 dont les premières extrémités sont couplées au plateau par une liaison rotule et dont les deuxièmes extrémités sont reçues à coulissement dans des cylindres (ou chemises) d'un barillet 9.

Le barillet est plaqué contre une glace de distribution 13 qui est elle-même en appui sur la paroi interne du carter du module hydraulique.

La paroi sur laquelle sont plaqués le barillet et la glace de distribution, est inclinée par rapport au plan de jonction des deux flasques d'un angle déterminé non nul (de l'ordre de 15° à 22°).

Chaque barillet comporte un nombre déterminé de chemises recevant respectivement les deuxièmes extrémités des pistons. Le fond des chemises comporte un orifice assurant une communication avec la glace de distribution pour le passage du fluide en mode aspiration ou en en mode refoulement du moteur hydraulique.

Chaque demi-boîtier du différentiel comporte une extension cylindrique centrée sur l'axe de rotation du moteur hydraulique qui s'étend suivant une direction opposée au flasque.

Cette extension définit un arbre du moteur hydraulique comportant un logement interne recevant un des arbres de sortie du différentiel solidaire du pignon planétaire.

Chaque arbre du moteur hydraulique comporte un premier épaulement définissant une première portée cylindrique sur laquelle est monté un pallier 5, notamment un roulement à billes (ou à rouleaux conique), permettant de supporter l'arbre du moteur hydraulique en rotation dans le carter du module hydraulique.

Chaque arbre du moteur hydraulique comporte un deuxième épaulement définissant une seconde portée cylindrique, adjacente à la première, et un joint homocinétique à billes à centre fixe 15 est monté sur cette deuxième portée cylindrique supportant en rotation le barillet et la glace de distribution.

Le module hydraulique 11 est ainsi constitué d'un différentiel classique intégré à l'intérieur d'un moteur hydraulique à pistons axiaux sur rotule.

Le moteur hydraulique 11 comporte ainsi deux sous-ensembles qui sont symétriques par rapport au plan de jonction. Chaque partie comporte un ensemble de pistons sur rotules, un barillet et un plateau fixe commun aux deux parties droite et gauche du moteur et qui fait partie du boitier du différentiel.

Le moteur hydraulique 11 transforme le débit / pression hydraulique des accumulateurs et/ou de la pompe, en couple mécanique.

Le couple produit par le moteur hydraulique est appliqué au plateau fixe qui le transmet à travers l'axe du porte satellite aux pignons satellites et aux pignons planétaires qui sont solidaires des roues (non représentées).

A ce stade, on retrouve le fonctionnement d'un différentiel classique.

Deux cas de figures peuvent se présenter :

Dans un premier cas de figure, les deux arbres de sortie, reliés respectivement aux roues, tournent à la même vitesse : l'effort de rotation est donc réparti équitablement et les pignons satellites ne tournent pas.

Dans un deuxième cas de figure, les deux arbres de sortie ne tournent pas à la même vitesse : les pignons satellites sont alors entraînés et transfèrent une rotation supplémentaire à l'arbre qui tourne alors à une vitesse supérieure.

Ainsi, la boîte de vitesses classique et la couronne du différentiel sont avantageusement remplacées par un moteur hydraulique qui produit un couple à partir de la pression hydraulique stockée dans les accumulateurs ou fournie par une pompe, et l'applique directement au boîtier du différentiel.

La présente invention est applicable quel que soit le nombre de pistons dans le moteur/pompe hydraulique, le nombre de satellites dans le différentiel et le type de joint homocinétique.

Elle peut s'appliquer également à d'autres technologies de pompes comme les pompes à pistons radiaux.

Elle est applicable pour des différentiels avant et/ou les différentiels arrière pour des véhicules à deux roues motrices et les différentiels centraux pour des véhicules à quatre roues motrices.

Dans une variante, le module hydraulique selon l'invention peut comporter un différentiel avec une couronne au cas où on veut ajouter à la transmission hydrostatique une boîte de vitesses classique avec un ou plusieurs rapports. Dans ce cas, la boîte de vitesses classique transmet le couple au différentiel par la couronne du différentiel et le moteur hydraulique transmet le couple au différentiel par le boîtier du différentiel.

## Revendications

1. Module hydraulique compact (12) pour fournir une puissance motrice à un véhicule, comprenant un carter (16) dans lequel est logé un moteur hydraulique (11) comprenant une glace de distribution (13) et un barillet (9) disposés de part et d'autre d'un plateau fixe commun (8) et des pistons axiaux sur rotules (6, 7) disposés entre le plateau et le barillet et coopérant avec eux ; ledit moteur hydraulique convertissant l'énergie provenant d'un fluide sous pression, en énergie mécanique sous la forme d'un couple entraînant un différentiel, contenu dans le même carter et dont les arbres de sorties (3) sont couplés aux roues motrices du véhicule ; ledit différentiel comportant un boîtier (4) contenant des pignons satellites (1) coopérant avec des pignons planétaires (2) solidaires des arbres de sortie du différentiel, couplés aux roues motrices du véhicule et configurés pour distribuer le couple vers les arbres de sortie, dans lequel le différentiel est monté en rotation à l'intérieur du moteur hydraulique, et l'axe de rotation (XX') du moteur hydraulique est confondu avec l'axe de rotation du différentiel.

2. Module hydraulique selon la revendication précédente, **caractérisé en ce que** le boîtier du différentiel comporte deux demi-boîtiers présentant chacun un flasque ; les deux flasques étant fixés solidairement entre eux et définissant le plateau commun à des premier et second sous-ensembles du moteur hydraulique, disposés de part et d'autre du plateau commun et centrés sur l'axe de rotation du différentiel ; chaque sous-ensemble comportant une série de pistons dont les premières extrémités sont couplées au plateau par une liaison rotule et dont les deuxièmes extrémités sont reçues à coulissement dans le barillet ; ledit barillet étant plaqué contre la glace de distribution en appui sur la paroi interne du carter du module hydraulique.

3. Module hydraulique selon la revendication précédente, **caractérisé en ce que** chaque barillet comporte des chemises recevant respectivement les deuxièmes extrémités des pistons ; le fond des chemises communiquant avec la glace de distribution pour le passage du fluide en mode aspiration ou en mode refoulement du moteur hydraulique.

4. Module hydraulique selon la revendication précédente, **caractérisé en ce que** le différentiel est disposé au centre du carter du module hydraulique ; le plateau commun s'étendant suivant un plan perpendiculaire au plan par lequel passent l'axe de rotation du moteur hydraulique.

5. Module hydraulique selon la revendication précédente, **caractérisé en ce que** chaque demi-boîtier du différentiel comporte une extension cylindrique centrée sur l'axe de rotation du moteur hydraulique, s'étendant suivant une direction opposée au flasque ; ladite extension définissant un arbre du moteur hydraulique comportant un logement interne recevant un des arbres de sortie du différentiel solidaire du pignon planétaire.

6. Module hydraulique selon la revendication précédente, **caractérisé en ce que** chaque arbre du moteur hydraulique comporte un premier épaulement définissant une première portée cylindrique sur laquelle est monté un pallier (5) permettant de supporter l'arbre du moteur hydraulique en rotation dans le carter du module hydraulique.

7. Module hydraulique selon la revendication précédente, **caractérisé en ce que** la paroi sur laquelle sont plaqués le barillet et la glace de distribution, est inclinée par rapport au plan de jonction (10) des deux flasques d'une angle déterminé non nul.

8. Module hydraulique selon la revendication précédente, **caractérisé en ce que** chaque arbre du moteur hydraulique comporte un deuxième épaulement définissant une seconde portée cylindrique, adjacente à la première, **en ce qu'**un joint homocinétique (15) est monté sur la deuxième portée cylindrique supportant en rotation le barillet et la glace de distribution.

9. Véhicule hybride hydraulique comportant un module hydraulique compact selon l'une des revendications précédentes.

10. Véhicule hybride hydraulique selon la revendication précédente, **caractérisé en ce que** le véhicule est un véhicule hybride série.

## Patentansprüche

1. Kompaktes hydraulisches Modul (12) zum Liefern einer Antriebsleistung zu einem Fahrzeug, das ein Gehäuse (16) umfasst, in dem ein hydraulischer Motor (11) aufgenommen ist, der eine Verteilerplatte (13) und einen Zylinder (9) umfasst, die auf beiden Seiten eine gemeinsamen fixen Platte (8) angeordnet sind, und axiale Kolben auf Gelenken (6, 7), die zwischen der Platte und dem Zylinder angeordnet sind und mit ihnen zusammenwirken, wobei der hydraulische Motor Energie, die von einem Fluid unter Druck stammt, in mechanische Energie in Form eines Drehmoments umwandelt, das ein Differenzial antreibt, das in demselben Gehäuse enthalten ist und dessen Ausgangswellen (3) mit den Antriebsrädern des Fahrzeugs gekuppelt sind, wobei das Differenzial ein Gehäuse (4) umfasst, das Satellitenräder (1) enthält, die mit Planetenrädern (2), die fest mit den Ausgangswellen des Differenzials gekuppelt sind, zusammenwirken, die mit den Antriebsrädern des Fahrzeugs gekuppelt und konfiguriert sind, um das Drehmoment zu den Ausgangswellen zu verteilen, wobei das Differenzial in Drehung im Inneren des hydraulischen Motors montiert ist, und die Rotationsachse (XX') des hydraulischen Motors mit der Rotationsachse des Differenzials zusammenfällt.

2. Hydraulisches Modul nach dem vorhergehenden Anspruch, **dadurch gekennzeichnet, dass** das Gehäuse des Differenzials zwei Halbgehäuse umfasst, die jeweils einen Flansch aufweisen, wobei die zwei Flansche fest miteinander befestigt sind und die gemeinsame Platte für eine erste und eine zweite Unterbaugruppe des hydraulischen Motors definieren, die zu beiden Seiten der gemeinsamen Platte angeordnet und auf der Rotationsachse des Differenzials zentriert sind, wobei jede Unterbaugruppe eine Reihe von Kolben umfasst, deren erste Enden mit der Platte durch eine Gelenkverbindung gekuppelt sind, und deren zweite Enden gleitend in dem Zylinder aufgenommen sind, wobei der Zylinder gegen die Verteilerplatte in Auflage auf der inneren Wand des Gehäuses des hydraulischen Moduls angedrückt ist.

3. Hydraulisches Modul nach dem vorhergehenden Anspruch, **dadurch gekennzeichnet, dass** jeder Zylinder Mäntel aufweist, die jeweils die zweiten Enden der Kolben aufnehmen, wobei der Grund der Mäntel mit der Verteilerplatte für das Durchgehen des Fluids im Ansaugmodus oder im Fördermodus des hydraulischen Motors kommuniziert.

4. Hydraulisches Modul nach dem vorhergehenden Anspruch, **dadurch gekennzeichnet, dass** das Differenzial in der Mitte des Gehäuses des hydraulischen Moduls angeordnet ist, wobei sich die gemeinsame Platte entlang einer Ebene senkrecht zu der Ebene, durch die die Rotationsachse des hydraulischen Motors durchgeht, erstreckt.

5. Hydraulisches Modul nach dem vorhergehenden Anspruch, **dadurch gekennzeichnet, dass** jedes Halbgehäuse des Differenzials eine zylindrische Erweiterung umfasst, die auf der Rotationsachse des hydraulischen Motors zentriert ist, die sich entlang einer Richtung entgegengesetzt zu dem Flansch erstreckt, wobei die Erweiterung eine Welle des hydraulischen Motors definiert, die eine innere Aufnahme umfasst, die eine der Ausgangswellen des Differenzials, die fest mit dem Planetenrad verbunden ist, aufnimmt.

6. Hydraulisches Modul nach dem vorhergehenden Anspruch, **dadurch gekennzeichnet, dass** jede Welle des hydraulischen Motors einen ersten Ansatz umfasst, der eine erste zylindrische Auflage definiert, auf die ein Lager (5) montiert ist, das es erlaubt, die Welle des hydraulischen Motors in Drehung in dem Gehäuse des hydraulischen Moduls zu tragen.

7. Hydraulisches Modul nach dem vorhergehenden Anspruch, **dadurch gekennzeichnet, dass** die Wand, auf die der Zylinder und die Verteilerplatte angedrückt sind, in Bezug auf die Verbindungsebene (10) der zwei Flansche um einen bestimmten Winkel, der nicht gleich null ist, geneigt ist.

8. Hydraulisches Modul nach dem vorhergehenden Anspruch, **dadurch gekennzeichnet, dass** jede Welle des hydraulischen Motors einen zweiten Ansatz umfasst, der eine zweite zylindrische Auflage neben der ersten definiert, dass ein homogenetisches Gelenk (15) auf die zweite zylindrische Auflage montiert ist, die den Zylinder und die Verteilerplatte in Drehung trägt.

9. Hydraulisches Hybridfahrzeug, das ein kompaktes hydraulisches Modul nach einem der vorhergehenden Ansprüche umfasst.

10. Hydraulisches Hybridfahrzeug nach dem vorhergehenden Anspruch, **dadurch gekennzeichnet, dass** das Fahrzeug ein Serienhybridfahrzeug ist.

## Claims

1. A compact hydraulic module (12) for providing a vehicle with drive power, comprising a housing (16) in which a hydraulic motor (11) is housed comprising a distribution plate (13) and a cylinder (9) arranged to either side of a common fixed plate (8) and axial pistons on ball joints (6, 7) arranged between the plate and the cylinder and cooperating with them; said hydraulic motor converting the energy coming from a pressurised fluid into mechanical energy in the form of torque driving a differential, contained in the same housing, and wherein the output shafts (3) are coupled to the drive wheels of the vehicle; said differential comprising a casing (4) containing planet pinions (1) engaging with planetary gears (2) integral with the output shafts of the differential, coupled to the drive wheels of the vehicle and configured to distribute the torque to the output shafts, wherein the differential is mounted in rotation inside the hydraulic motor, and the axis of rotation (XX') of the hydraulic motor coincides with the axis of rotation of the differential.

2. The hydraulic module according to the preceding claim, **characterized in that** the casing of the differential comprises two half-casings each having a flange; the two flanges being fixed integrally with respect to one another and defining the plate common to first and second sub-assemblies of the hydraulic motor, disposed on either side of the common plate and centred on the axis of rotation of the differential; each sub-assembly comprising a series of pistons, the first ends of which are coupled to the plate by a swivel connection and the second ends of which are slidably received in the cylinder; said cylinder being arranged flat against the distribution plate, resting on the internal wall of the housing of the hydraulic module.

3. The hydraulic module according to the preceding claim, **characterized in that** each cylinder comprises sleeves receiving respectively the second ends of the pistons; the bottom of the sleeves communicating with the distribution plate for the passage of the fluid in aspiration mode or in discharge mode of the hydraulic motor.

4. The hydraulic module according to the preceding claim, **characterized in that** the differential is disposed in the centre of the housing of the hydraulic module; the common plate extending along a plane perpendicular to the plane through which the axis of rotation of the hydraulic motor passes.

5. The hydraulic module according to the preceding claim, **characterized in that** each half-casing of the differential comprises a cylindrical extension centred on the axis of rotation of the hydraulic motor, extending along a direction opposed to the flange; said extension defining a shaft of the hydraulic motor comprising an internal housing receiving one of the output shafts of the differential integral with the planetary gear.

6. The hydraulic module according to the preceding claim, **characterized in that** each shaft of the hydraulic motor comprises a first shoulder defining a first cylindrical seat on which there is mounted a bearing (5) permitting the shaft of the hydraulic motor to be supported in rotation in the housing of the hydraulic module.

7. The hydraulic module according to the preceding claim, **characterized in that** the wall on which the cylinder and the distribution plate are arranged in a flat manner is inclined with respect to junction plane (10) of the two flanges by a defined angle not equal to zero.

8. The hydraulic module according to the preceding claim, **characterized in that** each shaft of the hydraulic motor comprises a second shoulder defining a second cylindrical seat, adjacent to the first, **in that** a homokinetic joint (15) is mounted on the second cylindrical seat supporting in rotation the cylinder and the distribution plate.

9. A hydraulic hybrid vehicle comprising a compact hydraulic module according to one of the preceding claims.

10. The hydraulic hybrid vehicle according to the preceding claim, **characterized in that** the vehicle is a series hybrid vehicle.
